(19)

Europäisches Patentamt
European Patent Office
Office européen des brevets

(11) **EP 1 104 200 B1**

(12) **EUROPEAN PATENT SPECIFICATION**

(45) Date of publication and mention
of the grant of the patent:
**05.09.2007  Bulletin 2007/36**

(51) Int Cl.:
**H04N 7/50** (2006.01)

(21) Application number: **00403194.4**

(22) Date of filing: **16.11.2000**

(54) **Method and device for managing frame buffer memory size in a digital television system**

Steuerung der Bildspeichergrösse in einem digitalen TV-System

Méthode de commande de la taille d'un mémoire-tampon de trame dans un système télévision numérique

(84) Designated Contracting States:
**DE ES FR GB IT**

(30) Priority:  **23.11.1999  EP 99402916**

(43) Date of publication of application:
**30.05.2001  Bulletin 2001/22**

(73) Proprietor: **THOMSON multimedia**
**92100 Boulogne Billancourt (FR)**

(72) Inventor: **Leyendecker, Philippe**
**92648 Boulogne Cedex (FR)**

(74) Representative: **Kohrs, Martin**
**Thomson multimedia**
**46, quai A. Le Gallo**
**92648 Boulogne Cedex (FR)**

(56) References cited:
**US-A- 5 680 482**          **US-A- 5 818 533**
**US-A- 5 838 380**          **US-A- 5 909 224**

- **SHIN-ICHI URAMOTO ET AL: "AN MPEG2 VIDEO DECODER LSI WITH HIERARCHICAL CONTROL MECHANISM" IEICE TRANSACTIONS ON ELECTRONICS,JP,INSTITUTE OF ELECTRONICS INFORMATION AND COMM. ENG. TOKYO, vol. E78-C, no. 12, 1 December 1995 (1995-12-01), pages 1697-1708, XP000555576 ISSN: 0916-8524**
- **FLETCHER W ET AL: "APPLICATION OF MPEG IN THE RECEIVER" IEE COLLOQUIUM ON MPEG WHAT IT IS AND WHAT IT ISN'T, 1 January 1995 (1995-01-01), XP000749769**

**Description**

The invention concerns a method for managing frame buffers in a television system employing video compression such as MPEG 2. It is particularly adapted for use with trick modes. The invention also concerns a device, such as a digital television receiver and/or decoder, implementing this method.

The MPEG 2 video standard (described by ISO/IEC 13818-2) defines a minimum VBV buffer size of 1835008 bits in the video decoder model for Main Profile Main Level. The VBV buffer is destined to store compressed video data waiting to be decompressed. The compressed video data is read out of the buffer by the MPEG video decoder.

The actual implementation requires about 2.3 Mbit of VBV buffer in order to comply with the MPEG standard (i.e. permit decoding of any MP@ML MPEG-compliant bit stream). If such a buffer size were not respected, buffer overflow could occur in some instances.

Picture sizes in MP@ML are up to 720x576 pixels. Each frame buffer therefore requires 720x576x12 = 4976640 bits. Moreover, MPEG decoding normally requires three full frame buffers.
Including the VBV buffer, the amount of memory required is thus:

$$2.3 \ 10^6 + 3 \times 4.97 \ 10^6 = 17.23 \ 10^6 \ \text{bits} = 16.43 \ \text{Mbit}$$

In order to fit the frame buffer into 16 Mbit, most silicon manufacturers use a specific technique that allows to reduce the memory needed for storing the decoded frames.

This technique consists in reducing the amount of memory allocated to bidirectional frames ("B-frames"). The reason why this is possible is that in actual implementations the B-frame begins to be displayed before it is completely decoded. The displayed pixels can be removed from memory and the end of the picture can be decoded and subsequently stored in that part of the memory.

This technique allows to reduce from 3 to 2.75 the number of frame buffers needed for the real time decoding.

This has been made possible thanks to a restriction in the MPEG-2 or DVB standard for 50 Hz. According to this restriction, no B-frame can be displayed twice. A B-frame thus does not need to be kept in memory.

Trick modes are special video display mode such as slow or fast motion, in forward or reverse direction.

When playing in trick mode, it often happens that a B-frame has to be displayed repeatedly. Moreover, smooth trick modes require flexible control of the choice of the B-frame which has to be displayed during each the field display interval.

US-5818533 shows the usage of a temporary buffer for storing reconstructed B-frames.

The most convenient way to obtain this flexibility is to have three frame buffers available in the decoding system, but this is not compatible with the memory constraints defined above.

It is a goal of the invention to allow for flexible frame buffer management for trick modes in at least some instances.

The object of the invention is a method for managing frame buffer memory in a digital video decoder comprising a memory, said method being characterized in that, said decoder comprising a first compressed video source with uncontrollable output rate and a second compressed video source with controllable output rate,
said method comprises the steps of:

    (a) in case of activation of said first compressed video source,
    allocation of a first memory size to a frame buffer and of a second memory size to a compressed video buffer;
    (b) in case of activation of said second compressed video source,
    reallocation of part of said second memory size to said frame buffer.

Thus, frame buffer size may be increased when the source output rate is controllable. This is for instance the case when the second source is a storage device such as for example a hard disk drive or magnetic and/or optical drive (CD, DVD, MD...). In such a case, through the reallocation of the surplus of compressed video buffer memory, frame buffer size may be increased to three frames, and trick modes can be properly performed even if the total memory size is limited.

According to a particular embodiment if the invention, the method further comprises the step of controlling the output of said second compressed video source in order to avoid compressed video buffer overflow.

Another object of the invention is a digital video decoder comprising a frame buffer memory and a compressed video buffer memory, characterized in that it comprises
a first compressed video source with uncontrollable output rate;
a second compressed video source with controllable output rate;
means for reallocating part of said compressed video buffer memory to said frame buffer memory in case of activation of said second source.

According to a particular embodiment, the decoder further comprises means for controlling output of said second source for avoiding overflow of said compressed video buffer memory.

According to a particular embodiment, the first video source is a digital video broadcast.

According to a particular embodiment, the second video source is a high capacity storage means.

Other characteristics and advantages of the invention will appear through the description of a preferred, non limiting embodiment, described in reference to the enclosed drawings, among which:

- figure 1 is a block diagram of a digital decoder implementing the inventive method,
- figure 2 is a synoptic flowchart of the memory allocation to a compressed video buffer and a frame buffer.

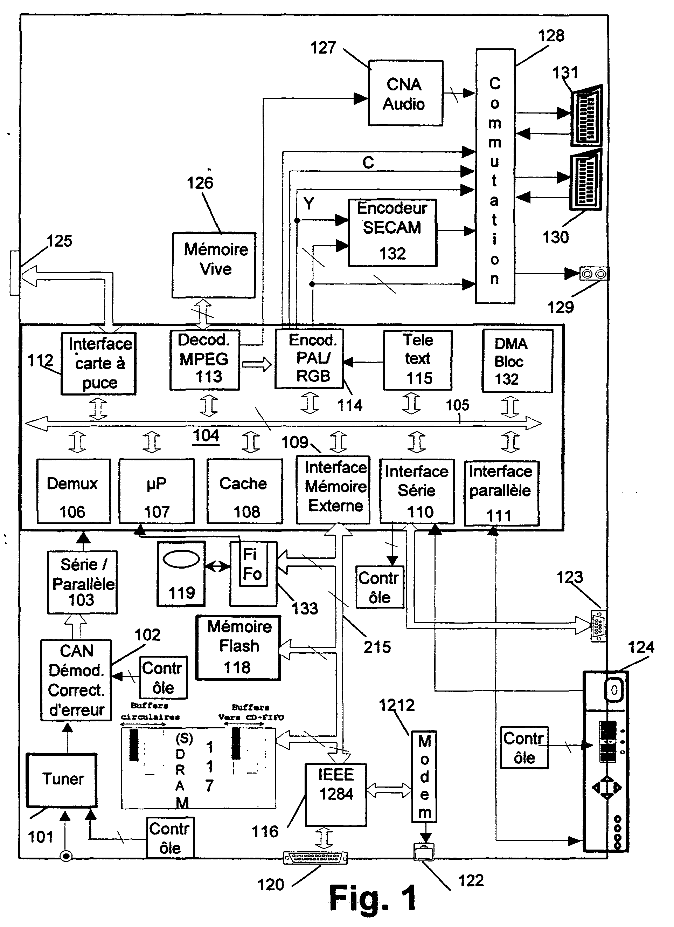

The digital television decoder of figure 1 comprises a tuner 101, connected to a demodulation and error correction circuit 102. The latter includes an analog to digital converter for converting the signals provided by the tuner. Depending on the type of reception (cable, satellite, terrestrial...), the demodulation is of the QAM, QPSK or OFDM type, and the circuit 102 contains the appropriate demodulation functions. Demodulated data is corrected and serialized by a converter 103, connected to a serial input of a demultiplexer and decoding circuit 104.

Circuit 104 comprises, linked to a parallel 32 bits central communication bus 105: a DVB demultiplexer 106, a microprocessor 107, a cache memory 108, an external memory interface 109, a serial communication interface 110, a parallel I/O interface 111, a smart card interface 112, an MPEG audio and video decoder 113, a PAL and RGB encoder 114 and a character generator 115.

The external memory interface 109 is connected to a parallel 16 bit bus, to which are respectively connected a parallel interface 116 of IEEE 1284 type, a RAM 117, a flash memory 118 and a hard disk drive 119. The latter is of the EIDE type, as far as the present example is concerned. The parallel interface 116 is also connected to an external connector 120 and to a modem 121, the latter being connected to an external connector 122.

RAM 117 is of the SDRAM type. It is destined to contain a number of buffer areas. The disk drive is connected to the bus 215 through an interface circuit 133. The interface 133 also comprises the read/write buffers from/to the hard disk drive.

The serial communication interface 110 is connected to an external connector 123, as well as to the output of an infrared reception circuit 124 adapted to receive signals from a remote control (not shown). The infrared reception subsystem is integrated into the front panel of the decoder, which also includes a display and a keyboard.

The smart card interface is connected to a smart card connector 125.

The audio and video decoder 113 is connected to a RAM 126 which contains 16 Mbit dedicated for video, adapted to store compressed video data in a compressed video data buffer area ,as well as decoded frames in a frame buffer area.

Decoded frames are transmitted to the PAL/RGB encoder 114. Decoded audio data is transmitted to digital to analog converter 127. The encoder transmits RBG signals to a SECAM encoder 132. It also provides luminance and chrominance component signals Y and C. The different signals are switched by switching circuit 128 to audio output 129, television 130 and video cassette recorder 131.

The flow of video data through the decoder is the following: the demodulated data stream has the format called Transport Stream (TS) in reference to the standard MPEG 2 Systems. The TS packets each comprise a header including an identifier called PID, which indicates to which elementary stream the payload of a packet belongs. Elementary streams are typically video streams and audio streams. Other type of data, especially sections relating to the stream description and to program guide information, is also sent using the TS layer.

Demultiplexer 106 is programmed by microprocessor 107 to extract TS packets corresponding to certain selected PID values. Payload of the demultiplexed packets is, if necessary, descrambled before being stored in the appropriate buffers in the decoder. As mentioned, compressed video data is stored in an area of RAM 126.

When the compressed video source is the broadcast network - as is the case in the two paragraphs above- be it cable, satellite, or terrestrial, the rate of incoming video data is not controlled by the receiver, but by the broadcaster In this case, the 16 Mbit of memory 126 are shared between the frame buffer and the compressed video buffer in such a way that the compressed video buffer is located in 2.3 Mbit, while 13.7 Mbit are allocated to the frame buffer. The 13.7 Mbit approximately correspond to 2.75 frames.

Another source of compressed video is the hard disk drive 119. It is supposed that compressed video has been previously recorded on this disk drive. When this source is activated, compressed video reading is controlled by microprocessor 107, which is able to monitor buffer levels through an interrupt line with interface circuit 133 and which sends instructions to the interface circuit for reading or writing blocks of data. For reading blocks of data, the microprocessor instructs the interface circuit 133, which reads the blocks from the disk drive, and transfers them to buffer areas of SDRAM 117. SDRAM 117 contains a video buffer, an audio buffer, and an auxiliary data buffer. The video data is then transferred to memory 126 through a direct memory access process initiated by the microprocessor, which monitors the compressed video buffer level in memory 126. MPEG decoder circuit 113 reads out data from this compressed video buffer as appropriate for the proper decoding mode, determined by the microprocessor. Thus, the whole transfer and decoding process is under the control of the microprocessor.

In such a case, the memory area allocated to the compressed video buffer in memory 126 is reduced to 1.75 Mbit (i.e. 1835008 bits), instead of 2.3 Mbit. This is possible since the constraints of real-time reception through the network do not apply. The difference of is allocated the frame buffer, which now has a total size of 14.25 Mbit (i.e. 14942208 bits), corresponding almost exactly to the size of three frames.

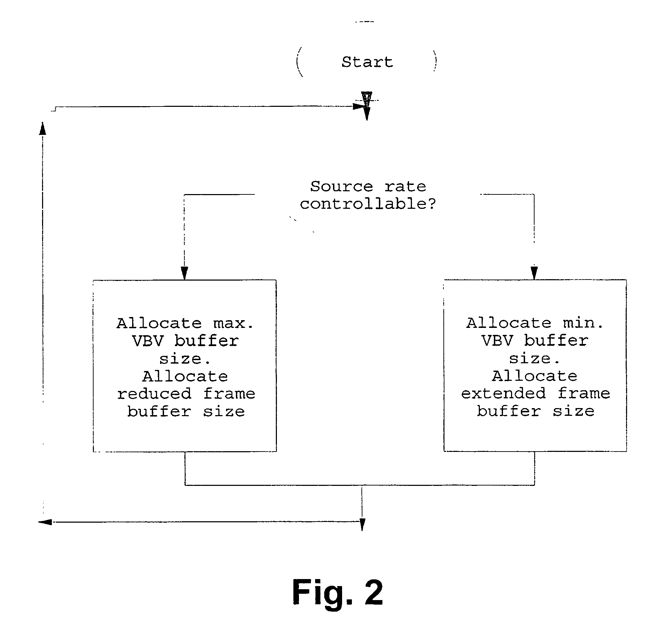

This process is illustrated by the flow chart of figure 2.

Thus trick mode may be performed with superior quality when the video source is the hard disk.

**Claims**

1. Method for managing frame buffer memory in a digital video decoder comprising a memory, said method being **characterized in that**, said decoder comprising a first compressed video source with uncontrollable output rate and a second compressed video source with controllable output rate,
   said method comprises the steps of:

   (a) in case of activation of said first compressed video source,
   allocation of a first memory size to a frame buffer and of a second memory size to a compressed video buffer;
   (b) in case of activation of said second compressed video source,
   reallocation of part of said second memory size to said frame buffer.

2. Method according to claim 1, further comprising the step of controlling the output of said second compressed video source in order to avoid compressed video buffer overflow.

3. Digital video decoder comprising a frame buffer memory and a compressed video buffer memory, **characterized in that** it comprises
   a first compressed video source with uncontrollable output rate;
   a second compressed video source with controllable output rate;
   means for reallocating part of said compressed video buffer memory to said frame buffer memory in case of activation of said second source.

4. Decoder according to claim 3, further comprising means for controlling output of said second source for avoiding overflow of said compressed video buffer memory.

5. Decoder according to claims 3 or 4, wherein the first video source is a digital video broadcast.

6. Decoder according to one of the claims 3 to 5, wherein the second video source is a high capacity storage means.

**Patentansprüche**

1. Verfahren zur Steuerung eines Bildspeichers in einem digitalen Video-Dekoder, der einen Speicher beinhaltet, das Verfahren ist
   **dadurch gekennzeichnet, dass**
   der Dekoder eine erste komprimierte Videoquelle mit nicht kontrollierbarer Ausgangsrate beinhaltet und eine zweite komprimierte Videoquelle mit kontrollierbarer Ausgangsrate beinhaltet, das Verfahren beinhaltet die Schritte:

   (a) im Falle der Aktivierung der ersten komprimierten Videoquelle, Zuordnung einer ersten Speicherkapazität zu einem Bildspeicher und einer zweiten Speicherkapazität zu einem komprimierten Videozwischenspeicher;
   (b) im Falle der Aktivierung der zweiten komprimierten Videoquelle, Neuzuordnung eines Teils der zweiten Speicherkapazität zum Bildspeicher.

2. Verfahren nach Anspruch 1, das ferner den Schritt zur Steuerung des Ausgangs der zweiten komprimierten Videoquelle beinhaltet, um das Überlaufen des komprimierten Videozwischenspeichers zu vermeiden.

3. Digitaler Video-Dekoder, der einen Bildpufferspeicher und einen komprimierten Videopufferspeicher beinhaltet

**dadurch gekennzeichnet, dass**
er eine erste komprimierte Videoquelle mit einer unkontrollierbaren Ausgangsrate enthält;
eine zweite komprimierte Videoquelle mit kontrollierbarer Ausgangsrate;
Mittel zur Neuzuordnung eines Teils des komprimierten Videopufferspeichers zum Bildzwischenspeicher im Fall der Aktivierung der zweiten Quelle.

**4.** Dekoder nach Anspruch 3, der ferner Mittel zur Steuerung des Ausgangs der zweiten Quelle beinhaltet, um Überlaufen des komprimierten Videopufferspeichers zu vermeiden.

**5.** Dekoder nach Anspruch 3 und 4, wobei die erste Videoquelle eine digitale Video-Rundfunkübertragung ist.

**6.** Dekoder nach einem der Ansprüche 3 bis 5, wobei die zweite Videoquelle ein Hochleistungsspeichermittel ist.

**Revendications**

**1.** Procédé de gestion d'un tampon d'image dans un décodeur vidéo numérique comportant une mémoire, ledit procédé étant **caractérisé en ce que**, le dit décodeur comportant une première source vidéo compressée avec débit de sortie non contrôlable et une deuxième source vidéo compressée avec débit de sortie contrôlable,
ledit procédé comporte les étapes suivantes :

(a) en cas d'activation de ladite première source vidéo compressée,
affectation d'une première taille de mémoire à un tampon d'image et d'une deuxième taille de mémoire à un tampon de vidéo compressée ;
(b) en cas d'activation de ladite deuxième source vidéo compressée,
réaffectation d'une partie de la dite deuxième taille de mémoire audit tampon d'image.

**2.** Procédé selon la revendication 1, comportant en outre l'étape de commande de la sortie de ladite deuxième source vidéo compressée afin d'éviter un dépassement de capacité du tampon de vidéo compressée.

**3.** Décodeur vidéo numérique comportant un tampon d'image et un tampon de vidéo compressée, **caractérisé en ce qu'**il comporte
une première source vidéo compressée avec un débit de sortie non contrôlable ;
une deuxième source vidéo compressée avec un débit de sortie contrôlable ;
un moyen de réaffectation d'une partie dudit tampon de vidéo compressée audit tampon d'image en cas d'activation de ladite deuxième source.

**4.** Décodeur selon la revendication 3, comportant en outre un moyen de commander la sortie de ladite deuxième source pour éviter un dépassement de capacité dudit tampon de vidéo compressée.

**5.** Décodeur selon la revendication 3 ou 4, dans lequel la première source vidéo est un système de diffusion vidéo numérique.

**6.** Décodeur selon l'une des revendications 3 à 5, dans lequel la deuxième source vidéo est un moyen de mémorisation de grande capacité.

**Fig. 1**

( Start )

Source rate
controllable?

Allocate max.
VBV buffer
size.
Allocate
reduced frame
buffer size

Allocate min.
VBV buffer
size.
Allocate
extended frame
buffer size

# Fig. 2

**EP 1 104 200 B1**

## REFERENCES CITED IN THE DESCRIPTION

### Patent documents cited in the description

- US 5818533 A